# FASCICULE DE BREVET EUROPEEN

(11) **EP 2 607 145 B1**
(45) Date de publication et mention de la délivrance du brevet: **13.09.2017**
(21) Numéro de dépôt: 12199181.4
(22) Date de dépôt: 21.12.2012
(51) Int. Cl.: B60L 5/20, B60L 5/26, B60L 5/19

(54) **Pantographe de véhicule ferroviaire**
Pantograf für Schienenfahrzeug
Railway vehicle pantograph

(30) Priorité: 23.12.2011 FR 1162375
(43) Date de publication de la demande: 26.06.2013
(73) Titulaire: ALSTOM Transport Technologies, 93400 Saint-Ouen (FR)
(72) Inventeur: Cornic, Daniel, 78112 Fourqueux (FR); Dumas, Bernard, 69630 Chaponost (FR)
(74) Mandataire: Lavoix

(56) Documents cités:
- EP-A1- 1 419 925
- EP-A1- 2 311 684
- DE-C- 582 118
- DE-C- 624 930
- DE-C1- 19 814 417
- DE-U1- 9 304 251

## Description

La présente invention concerne un pantographe de véhicule ferroviaire comprenant :
- un bras articulé déployable de support, et
- un archet monté à l'extrémité du bras articulé, lequel archet comporte un support rigide porté à l'extrémité du bras, et au moins une bande de frottement portée par le support.

La présente invention concerne également un véhicule ferroviaire comprenant un tel pantographe.

Les pantographes sont fixés sur le toit d'un véhicule ferroviaire et permettent de collecter, via une ou plusieurs bandes de frottement de l'archet, un courant disponible dans une caténaire, puis de transmettre ce courant à des machines électriques installées à bord du véhicule.

Dans la description qui va suivre, on désignera par l'appellation « position d'utilisation » la position dans laquelle un pantographe se trouve pour collecter le courant dans la caténaire.

Dans cette position d'utilisation, la ou les bandes de frottement de l'archet sont en contact avec la caténaire. Ces bandes de frottement sont alors dites en « position active ».

La plupart du temps, il est nécessaire d'utiliser des archets différents adaptés à la vitesse d'exploitation, au gabarit disponible, à la géométrie de la caténaire, à la tension d'alimentation de la ligne, par exemple lors du franchissement par le véhicule ferroviaire d'une frontière entre un premier pays équipé d'un réseau électrique ferroviaire délivrant une première tension et un second pays équipé d'un réseau électrique ferroviaire délivrant une seconde tension, différente de la première tension.

Il est fréquent que cette interopérabilité soit assurée par l'installation sur le véhicule ferroviaire de plusieurs pantographes, chaque pantographe comportant au moins un archet propre à un réseau ferroviaire donné.

Une autre solution de l'état de la technique permet de ne conserver qu'un seul pantographe sur le toit du véhicule ferroviaire. Cette solution consiste à substituer automatiquement un premier archet par un deuxième archet différent sur le pantographe.

On connaît du document EP 0 947 375 un tel pantographe. Le pantographe est propre à substituer un premier archet, équipé en position d'utilisation, par un deuxième archet situé au sein d'un magasin de stockage d'archets. Chaque archet stocké comporte au moins une bande de frottement différente des bandes de frottement des autres archets stockés.

Des moyens de substitution sont propres à désolidariser le premier archet à l'extrémité d'un bras articulé du pantographe, puis à transporter ce premier archet vers le magasin de stockage, afin de procéder à une substitution entre ce premier archet démonté et un deuxième archet, et enfin à monter ce deuxième archet à l'extrémité du bras articulé.

L'installation du magasin de stockage d'archets sur le toit du véhicule ferroviaire sur lequel est installé un tel pantographe introduit toutefois des contraintes de poids et des contraintes aérodynamiques pour l'ensemble du véhicule. Ceci engendre des surcoûts liés à la consommation d'énergie additionnelle engendrée pour le véhicule. DE9304251U décrit un pantographe selon le préambule de la revendication 1. Le but de l'invention est de proposer un pantographe de véhicule ferroviaire permettant d'assurer une interopérabilité du système de captage de courant du véhicule, tout en réduisant les contraintes de poids et les contraintes aérodynamiques engendrées avec la solution de la technique antérieure.

A cet effet, l'invention a pour objet un pantographe du type précité, caractérisé en ce que l'archet comporte :
- au moins une paire de cornes isolantes prolongeant de part et d'autre chaque bande de frottement, chaque corne isolante étant mobile par rapport au support de l'archet, et
- des moyens d'actionnement de chaque corne par rapport au support.

Suivant d'autres modes de réalisation, le pantographe comprend une ou plusieurs des caractéristiques suivantes, prises isolément ou suivant toutes les combinaisons techniquement possibles :
- les moyens d'actionnement sont propres à déplacer chaque corne indépendamment de la position du pantographe;
- les moyens d'actionnement comprennent au moins une paire d'actionneurs commandables à distance, par exemple une paire de vérins pneumatiques;
- le pantographe comporte des premiers moyens d'actionnement du bras articulé, des seconds moyens d'actionnement des bandes de frottement, et des moyens de commande des premiers et seconds moyens d'actionnement, de manière à substituer sur l'archet au moins une premier bande de frottement par au moins une deuxième bande de frottement différente de la première bande;
- la substitution de chaque première bande par chaque deuxième bande est réalisée par déplacement de chaque première bande depuis une position active dans laquelle cette bande de frottement est destinée à frotter contre une caténaire jusqu'au moins une position escamotée dans laquelle cette bande de frottement est à l'écart de la caténaire, et par déplacement de chaque deuxième bande depuis une position escamotée jusqu'à la position active;
- l'archet comprend deux premières bandes de frottement disposées simultanément dans la position active ou dans la position escamotée, et deux secondes bandes de frottement disposées simultanément dans la position escamotée ou dans la position active;
- chaque première bande de frottement présente deux extrémités, propre chacune à coopérer avec une patte de support prévue sur le support, les moyens de substitution étant propres à déplacer chaque première bande de frottement depuis sa position active supportée par la patte jusqu'à sa position escamotée dans un magasin de stockage, lequel magasin comporte au moins la deuxième bande de frottement, et à substituer sur les pattes chaque première bande de frottement par chaque deuxième bande de frottement;
- l'archet comporte au moins un barillet rotatif par rapport au support, chaque barillet rotatif portant au moins chacune des première et deuxième bandes de frottement et étant propre à décrire un mouvement de rotation par rapport au support, autour d'un axe longitudinal;
- l'archet comporte deux barillets rotatifs portant chacun des première et deuxième bandes de frottement;
- chaque barillet rotatif est cylindrique de forme polygonale présentant au moins deux faces, chaque première bande de frottement étant agencée sur une première face du barillet, et chaque deuxième bande de frottement étant agencée sur une deuxième face du barillet distincte de la première.

L'invention a également pour objet un véhicule ferroviaire comprenant un pantographe, caractérisé en ce que le pantographe est tel que défini ci-dessus.

On notera qu'on pourrait également envisager un pantographe de véhicule ferroviaire, du type comprenant :
- un bras articulé déployable de support,
- un archet monté à l'extrémité du bras articulé, lequel archet comporte un support rigide porté à l'extrémité du bras, et au moins une bande de frottement portée par le support,
caractérisé en ce que le pantographe comporte :
- des premiers moyens d'actionnement du bras articulé,
- des seconds moyens d'actionnement des bandes de frottement, et
- des moyens de commande des premiers et seconds moyens d'actionnement, de manière à substituer sur l'archet au moins une premier bande de frottement par au moins une deuxième bande de frottement différente de la première bande.

De manière optionnelle, les moyens d'actionnement comprennent au moins une paire d'actionneurs commandables à distance, par exemple une paire de vérins pneumatiques.

Ces caractéristiques et avantages de l'invention apparaîtront à la lecture de la description qui va suivre, donnée uniquement à titre d'exemple, et faite en référence aux dessins annexés, sur lesquels :
- la figure 1 est une vue schématique d'un véhicule ferroviaire selon l'invention, comprenant un pantographe selon un premier mode de réalisation de l'invention,
- la figure 2 est une vue en perspective partielle du pantographe de la figure 1,
- la figure 3 est une vue en perspective partielle d'un pantographe selon un deuxième mode de réalisation de l'invention, et
- la figure 4 est une vue schématique analogue à celle de la figure 1, selon une variante de réalisation du pantographe de la figure 3.

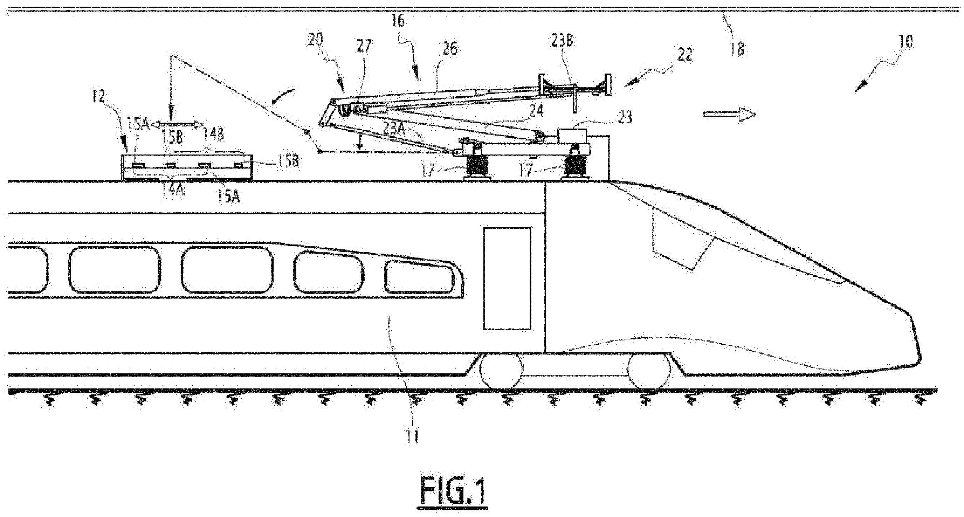

On a représenté, sur la figure 1, un véhicule ferroviaire 10 comprenant une caisse 11 et, en toiture, un système de captage de courant. Ce système comprend notamment un magasin 12 de stockage de jeux 14A, 14B de bandes de frottement et un pantographe 16 selon un premier mode de réalisation de l'invention propre à être équipé de ces bandes de frottement.

Le magasin 12 de stockage est fixé sur le toit de la caisse 11 du véhicule ferroviaire.

Chaque jeu 14A, 14B de bandes de frottement comporte deux bandes de frottement 15A, respectivement 15B, identiques.

Les bandes de frottement sont propres à être mises en contact avec une caténaire, lorsque le pantographe 16 portant ces bandes est dans une position d'utilisation. Une bande de frottement propre à être mise en contact avec une caténaire lorsque le pantographe est en position d'utilisation est dite « en position active ».

Les bandes de frottement 15A, respectivement 15B, de chaque jeu 14A, respectivement 14B, sont différentes en largeur et/ou en matière des bandes de frottement des autres jeux et sont adaptées à des caténaires de caractéristiques différentes.

Dans ce qui suit, on décrira un premier jeu 14A comprenant deux premières bandes de frottement 15A, et un deuxième jeu 14B comprenant deux deuxièmes bandes de frottement 15B. Le magasin de stockage 12 pourrait toutefois comporter une pluralité d'autres jeux de bandes de frottement.

Lesdites premières bandes de frottement 15A du premier jeu 14A sont propres, dans leur position active, à capter par exemple un courant associé à une tension délivrée de 1500 V. Comme décrit dans le tableau C1 de la norme EN 50367, de telles premières bandes de frottement 15A sont réalisées par exemple en alliage cuivre-acier.

Lesdites deuxièmes bandes de frottement 15B du deuxième jeu 14B sont propres, dans leur position active, à capter par exemple un courant associé à une tension délivrée de 3000 V. De telles deuxièmes bandes de frottement 15B sont réalisées par exemple en carbone métallisé.

Dans le magasin 12, les bandes de frottement sont disposées parallèlement les unes aux autres et perpendiculairement à la direction d'avancement du véhicule ferroviaire.

Le pantographe 16 est fixé sur le toit de la caisse 11 du véhicule ferroviaire au moyen d'isolateurs électriques 17 et est propre, dans sa position d'utilisation, à transmettre au véhicule 10 un courant électrique circulant dans une caténaire 18.

Le pantographe 16 comporte un bras articulé déployable 20 de support et un archet 22 monté à l'extrémité du bras 20.

Le bras 20 comprend une partie inférieure de bras 24 et une partie supérieure de bras 26, montée sur la partie inférieure de bras 24 au moyen d'une articulation 27.

Le pantographe 16 comporte également des moyens de commande 23, et :
- un premier actionneur 23A, propre à actionner le bras 20,
- un deuxième actionneur 23B, propre à actionner les bandes de frottement de l'archet 22, et
- deux paires de troisièmes actionneurs commandables à distance, portés par l'archet 22, qui seront décrits ultérieurement.

Les moyens de commande 23 sont reliés d'une part au premier actionneur 23A, d'autre part au deuxième actionneur 23B. Ils sont propres à envoyer des signaux de commande à chacun de ces premier 23A et deuxième 23B actionneurs.

Le premier actionneur 23A est propre à déplacer le bras 20 afin de transporter l'archet 22 depuis une première position, correspondant à la position d'utilisation du pantographe 16, jusqu'à une deuxième position.

Le deuxième actionneur 23B est propre à désengager chacune des bandes de frottement situées sur l'archet 22 et à les remplacer par des bandes de frottement 15A, 15B situées dans le magasin 12.

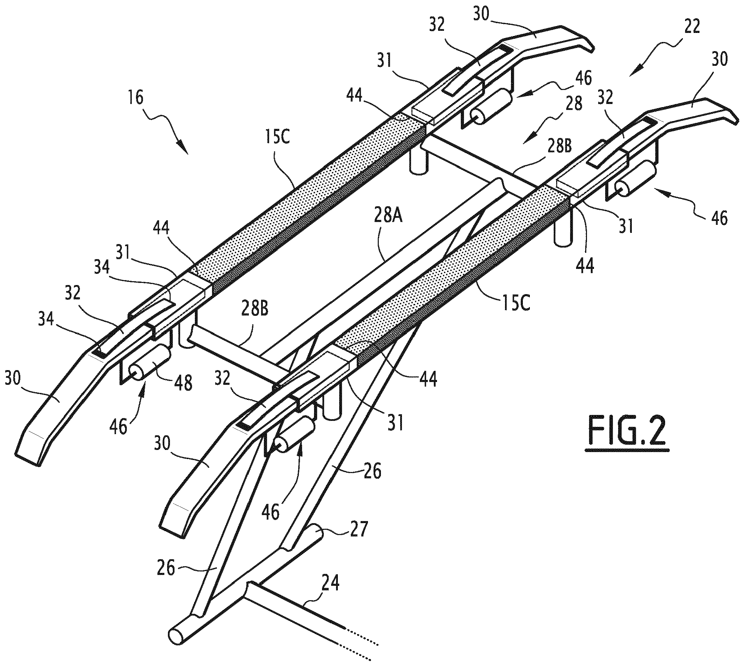

Avantageusement et comme illustré par la figure 2, l'archet 22 du pantographe 16 comporte un support rigide 28 en forme de H porté à l'extrémité de la partie supérieure de bras 26. Il comporte en outre deux paires de cornes 30 isolantes, et deux bandes de frottement 15C portées par le support 28. L'archet 22 porte par ailleurs les deux paires de troisièmes actionneurs commandables à distance mentionnés précédemment.

Le support rigide 28 comporte une traverse centrale 28A et deux longerons d'extrémités 28B s'étendant parallèlement au sens d'avancement du véhicule.

Aux quatre coins du support 28 ainsi formé sont prévues des pattes 31 de liaison disposées deux à deux en regard et propres à recevoir entre elles une bande de frottement 15C par exemple, alors en position active. Les bandes s'étendent alors parallèlement l'une à l'autre et perpendiculairement aux bras 24 et 26.

Pour la retenue des bandes sur leur support 28, les pattes 31 et les extrémités des bandes de frottement comportent des profils d'accrochage à verrouillage et déverrouillage automatique. En position d'utilisation du pantographe 16 l'accrochage est verrouillé. Il est automatiquement déverrouillé par un jeu de butées lorsque l'archet vient se positionner sur le magasin 12.

Le support 28 comporte en outre, dans le prolongement des bandes de frottement 15A, 15B, 15C en position active, les cornes 30 portées par les pattes 31.

Ces cornes 30, en forme de spatules à courbure tournée vers le véhicule ferroviaire, sont montées coulissantes depuis une extrémité reçue dans les pattes 31 et sont propres à isoler électriquement du reste du pantographe 16 les bandes de frottement 15A, 15B, 15C en position active.

Le support 28 comporte également quatre pièces de guidage 32. Chaque pièce de guidage 32 présente un profil en forme d'arc à courbure tournée vers le véhicule et comprend deux extrémités 34. Chaque pièce de guidage 32 est fixée par l'une de ses extrémités 34 sur l'une des cornes 30 et est montée coulissante via son autre extrémité 34 le long de la patte 31 correspondante, par exemple au moyen d'un dispositif à glissières connu en soi. Les pièces de guidage 32 sont propres à guider une caténaire depuis une patte 31 jusqu'à une corne isolante 30 correspondante et inversement, sans accrochage de la caténaire, par exemple lorsque le véhicule ferroviaire 10 décrit un virage. Ainsi, les pièces de guidage 32 permettent d'assurer le passage de la caténaire à l'interface corne isolante 30 - patte 31 sans risque d'accrochage.

En variante, chaque pièce de guidage 32 est fixée par une de ses extrémités sur une patte 31 et est montée coulissante sur la corne 30 correspondante.

Chaque bande de frottement 15C est propre à être mise en contact avec une caténaire dans sa position active.

Chaque bande de frottement 15C est propre, dans sa position active, à capter un courant associé à une tension de 25 kV délivrée par la caténaire 18. Ces bandes de frottement sont réalisées par exemple en carbone.

Chaque bande de frottement 15C présente deux extrémités 44. Chaque bande de frottement 15C est engagée par chacune de ses extrémités 44 dans une patte 31.

Chaque bande de frottement 15C est mobile par rapport au support 28, par désengagement des deux pattes 31 dans lesquelles elle est engagée.

L'un des troisièmes actionneurs commandables à distance est monté entre chaque corne 30 et chaque patte 31 correspondante pour déplacer chaque corne 30 par rapport au support 28.

Les troisièmes actionneurs commandables à distance sont dans cet exemple des vérins pneumatiques 46.

Chaque vérin pneumatique 46 comporte une tige 48 et est fixé par une de ses extrémités sur une patte 31 et par son autre extrémité sur la corne 30 correspondante. La tige 48 s'étend parallèlement à la plus longue direction de ladite patte 31.

Chaque vérin pneumatique 46 est propre à déplacer la corne 30 sur laquelle il est fixé par l'une de ses extrémités, entre une position rétractée correspondant à une longueur minimale de l'archet 22 et une position déployée correspondant à une longueur maximale de l'archet 22, la longueur étant mesurée perpendiculairement au sens d'avancement du véhicule ferroviaire.

En variante un seul vérin est fixé sur la traverse centrale 28A et commande le déploiement des cornes 30 par un ensemble de bielles commandé par ce vérin unique.

En variante les troisièmes actionneurs commandables à distance sont des vérins électriques ou hydrauliques.

En variante, l'archet 22 comporte un nombre N de paires de cornes 30 isolantes, ainsi que N bandes de frottement 15C et N paires d'actionneurs, N étant un nombre entier supérieur ou égal à trois.

En variante, l'archet 22 ne comporte pas de troisième actionneur commandable à distance.

Le fonctionnement du pantographe 16 selon le premier mode de réalisation de l'invention va désormais être expliqué.

Le véhicule ferroviaire 10 circule dans un premier pays équipé d'un premier réseau électrique ferroviaire délivrant une tension de 25 kV sur la caténaire 18. On suppose que le véhicule 10 est sur le point de franchir une frontière entre le premier pays et un second pays équipé d'un second réseau électrique ferroviaire délivrant par exemple une tension de 3000 V sur une caténaire 49.

Pour que le véhicule ferroviaire 10 puisse circuler dans le second pays selon les caractéristiques propres à la caténaire de ce second pays, il est en particulier nécessaire de procéder au remplacement, également appelé substitution, des deux premières bandes de frottement 15C adaptées au premier réseau par deux deuxièmes bandes de frottement 15B adaptées au second réseau.

Pour ce faire, le véhicule ferroviaire 10 est mis à l'arrêt. Puis, comme illustré par la figure 1, les moyens de commande 23 commandent le premier actionneur 23A du bras 20 pour un déplacement de l'archet 22 depuis la position d'utilisation du pantographe 16 jusqu'à une position engagée dans le magasin 12 de stockage, comme illustré en traits mixtes sur la figure 1.

Les moyens de commande 23 commandent alors le deuxième actionneur 23B de l'archet 22, afin qu'il désengage chacune des deux bandes de frottement 15C des pattes 31 dans lesquelles elles sont engagées. Les moyens de commande 23 commandent ensuite le deuxième actionneur 23B de l'archet 22 afin qu'il remplace dans le magasin 12 le deuxième jeu 14B de bandes de frottement 15B par le jeu de premières bandes de frottement 15C, et engage chacune des deuxièmes bandes de frottement 15B dans les pattes 31 du support 28.

Les moyens de commande 23 commandent ensuite le premier actionneur 23A du bras 20 pour un déplacement de l'archet 22 depuis une position engagée dans le magasin 12 de stockage jusqu'à la position d'utilisation du pantographe 16 portant les deuxièmes bandes de frottement 15B.

Le contrôle des moyens de commande 23 est géré par un organe de commande, non représenté, en cabine de conduite qui permet au conducteur, notamment de démarrer à distance la séquence de substitution des bandes de frottement 15C.

En variante, la substitution des bandes de frottement 15C est réalisée automatiquement, sans intervention du conducteur. Dans ce cas, les moyens de commande 23 sont reliés à des moyens de positionnement du train, par exemple de type GPS, et à des moyens de traitement du positionnement, internes ou externes des moyens de commande 23. En fonction de données de positionnement prédéterminées, par exemple un point de franchissement d'une frontière, ces moyens de traitement du positionnement sont propres à envoyer des ordres, sous forme de signaux de commande, de substitution des bandes de frottement 15C.

En variante, les moyens de commande 23 reçoivent directement des ordres de substitution des bandes de frottement 15C, à partir d'ordres reçus d'organes de communication disposés le long de la voie, par exemple des balises au sol.

Ainsi, au cours de cette modification de configuration de l'archet, les premières bandes de frottement 15C passent de leur position active à une position escamotée dans le magasin. Dans cette position escamotée, les premières bandes de frottement sont donc à l'écart de la caténaire lorsque le pantographe est dans la position d'utilisation.

En revanche, les secondes bandes de frottement 15B passent de la position escamotée à la position active.

En variante ou en combinaison avec la modification de configuration présentée ci-dessus, on prévoit d'adapter la configuration de l'archet 22 aux contraintes techniques imposées par le réseau électrique ferroviaire du second pays, notamment en termes de gabarit d'obstacles, en modifiant la longueur de l'archet 22.

A cet effet, les troisièmes actionneurs (ici, les vérins pneumatiques 46) modifient la longueur de l'archet 22 par déplacement de chaque corne 30 isolante par rapport au support 28. Chaque pièce de guidage 32, entraînée par une corne 30 correspondante, se déplace alors également par rapport au support 28, suivant un mouvement de translation selon une direction perpendiculaire à la direction d'avancement du véhicule ferroviaire.

On notera que ce déplacement des cornes 30 est réalisé indépendamment de la position du pantographe. En d'autres termes, ce déplacement des cornes 30 peut être réalisé dans une position donnée du pantographe 16, sans nécessiter de déplacement de ce pantographe 16.

On conçoit ainsi qu'un tel pantographe 16 permet d'assurer une interopérabilité du système de captage de courant du véhicule ferroviaire 10, tout en permettant la réduction de la taille et du poids du magasin de stockage 12 de bandes de frottement par rapport au magasin de stockage d'archets de la solution de la technique antérieure.

Le véhicule ferroviaire 10 est ainsi équipé d'un unique pantographe 16, l'interopérabilité du système de captage de courant étant assurée par la multiplicité des jeux 14A, 14B de bandes de frottement 15A, 15B stockés au sein du magasin de stockage 12.

Par ailleurs le pantographe 16 selon ce premier mode de réalisation présente de meilleures caractéristiques aérodynamiques, et permet ainsi de réduire sensiblement les coûts liés à la consommation électrique du véhicule 10.

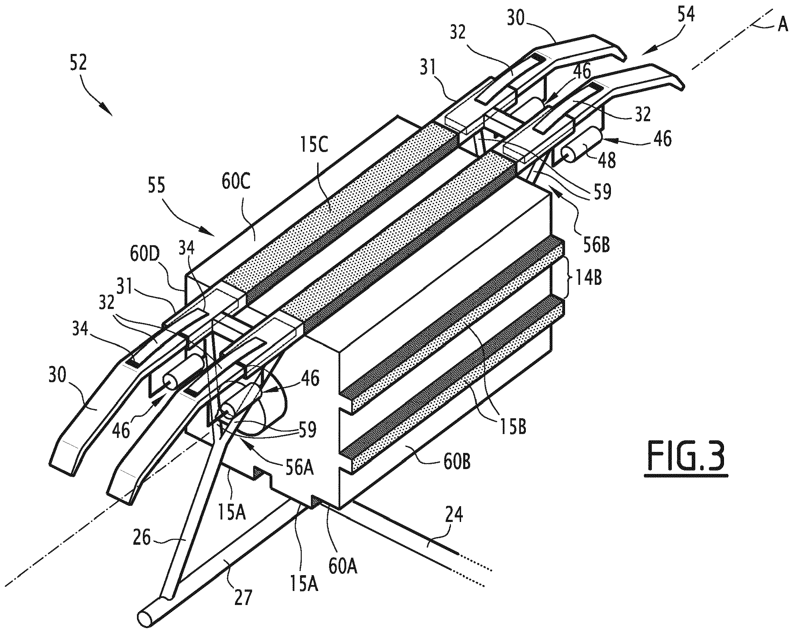

La figure 3 illustre un deuxième mode de réalisation de l'invention, pour lequel les éléments analogues à ceux du premier mode de réalisation décrit précédemment sont repérés par des références identiques, et ne sont donc pas décrits à nouveau.

Un véhicule ferroviaire 50 est muni d'un système de captage de courant comportant un pantographe 52 selon l'invention. A la différence du système de captage de courant du véhicule ferroviaire 10 selon le premier mode de réalisation de l'invention, le système de captage de courant du véhicule ferroviaire 50 ne comporte pas de magasin de stockage de bandes de frottement.

Le pantographe 52 comporte un bras articulé déployable 20 de support et un archet 54 monté à l'extrémité du bras 20.

A la différence du pantographe 16 selon le premier mode de réalisation, le pantographe 52 selon le deuxième mode de réalisation ne comporte pas de deuxième actionneur 23B de l'archet 54.

En revanche, ce pantographe 52 comporte un barillet 55, porté par l'archet 54.

Outre ce barillet 55, l'archet 54 comporte un support 56 porté à l'extrémité de la partie supérieure 26 du bras. Il comporte en outre deux paires de cornes 30 isolantes, six bandes de frottement portées par le barillet 55, et deux paires de troisièmes actionneurs commandables à distance.

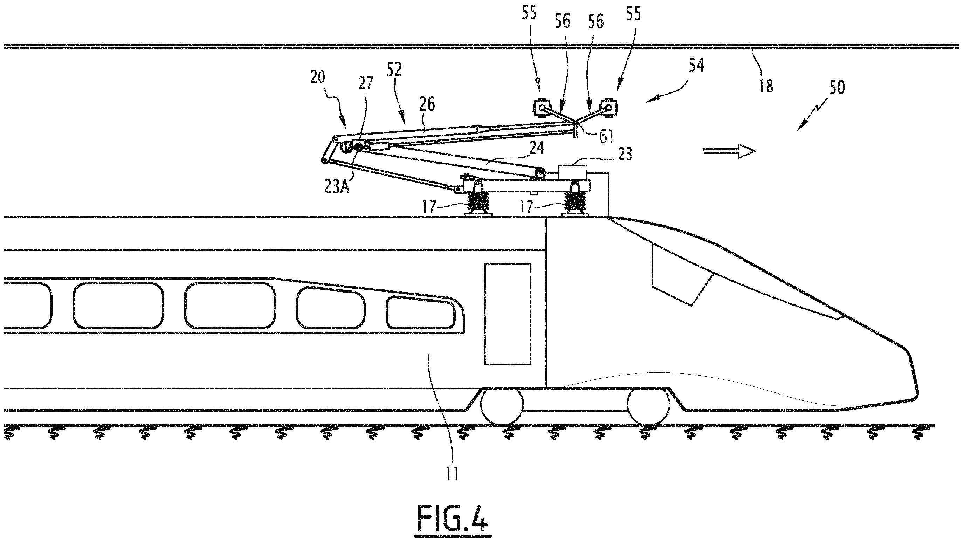

Comme illustré par la figure 3, le support 56 est notamment composé de deux fourches 56A, 56B disjointes. Chaque fourche 56A, 56B est formée d'un assemblage rigide de branches soudées entre elles. Dans les exemples de réalisation des figures 3 et 4, les branches sont des tubes métalliques 59 et chaque fourche 56A, 56B définit une forme en « V ».

Les pattes 31 sont fixées aux extrémités des fourches 56A, 56B et délimitent entre elles un espace de réception des bandes de frottement. Comme précédemment, les pattes 31 sont équipées des cornes 30, mobiles par rapport au support 56.

Le barillet 55 est monté rotatif entre les fourches 56A, 56B du support 56 et est propre à décrire un mouvement de rotation autour d'un axe longitudinal (A).

Le barillet 55 est avantageusement cylindrique de forme polygonale.

Dans l'exemple de réalisation de la figure 3, le barillet 55 est avantageusement un parallélépipède rectangle et comporte quatre faces 60A, 60B, 60C et 60D.

Chaque face 60A, 60B, 60C porte respectivement un jeu 14A, 14B, 14C de deux bandes de frottement 15A, respectivement 15B, 15C. Dans l'exemple de réalisation de la figure 3, la face 60D ne porte aucune bande de frottement.

A la différence des bandes de frottement de l'archet 22 selon le premier mode de réalisation de l'invention, les bandes de frottement 15A, 15B, 15C ne sont pas engagées par leurs extrémités 44 dans les pattes 31.

Chaque bande de frottement 15A, 15B, 15C est ainsi mobile par rapport au support 56, par rotation du barillet 55 autour de l'axe (A).

Un troisième actionneur commandé à distance est monté entre chaque corne 30 et chaque patte 31 correspondante pour déplacer chaque corne 30 par rapport au support 56, comme cela a été décrit précédemment.

Les troisièmes actionneurs commandés à distance sont dans cet exemple des vérins pneumatiques 46.

En variante un unique vérin est fixé à l'intérieur du barillet 55 et commande le déploiement des cornes 30 par un ensemble de bielles commandé par ce vérin unique.

En variante les actionneurs commandés à distance sont des vérins électriques ou hydrauliques.

En variante, l'archet 54 comporte un nombre M de bandes de frottement portées par le barillet 55, M étant un nombre entier supérieur ou égal à deux et différent de six.

En variante, l'archet 54 comporte un nombre N de paires de cornes 30 isolantes, ainsi que N paires d'actionneurs, N étant un nombre entier supérieur ou égal à trois.

En variante, l'archet 54 ne comporte pas de troisièmes actionneurs commandés à distance.

Le fonctionnement du pantographe 52 selon le second mode de réalisation va désormais être expliqué.

Le véhicule ferroviaire 50 est mis à l'arrêt afin de pouvoir procéder au remplacement des deux premières bandes de frottement 15C adaptées au premier réseau par les deux bandes de frottement 15B adaptées au second réseau.

Les moyens de commande 23 commandent le premier actionneur 23A pour un déplacement du bras 20 afin d'abaisser l'archet 54 du pantographe 52. Le barillet 55 décrit ensuite un mouvement de rotation sur lui-même, de manière à déplacer les deux bandes de frottement 15B du jeu 14B jusqu'à leur position active respective. Ce mouvement de rotation est effectué manuellement, par actionnement du barillet 55 par un utilisateur.

Dans le même temps, ce mouvement de rotation déplace les premières bandes de frottement 15C à distance de la caténaire. Ces premières bandes de frottement 15C sont alors dites « en position escamotée ».

En variante, le barillet 55 est équipé d'un moteur d'entraînement en rotation et le pantographe 52 comporte des moyens de commande de ce moteur.

Ce deuxième mode de réalisation de l'invention présente l'avantage de réduire le temps nécessaire à la substitution commandée des bandes de frottement, par rapport au premier mode de réalisation décrit précédemment. En effet, le véhicule ferroviaire selon le deuxième mode de réalisation de l'invention ne comportant plus de magasin de stockage, la substitution commandée des bandes de frottement est effectuée directement par rotation du barillet 55, sans nécessiter de déplacement du bras 20 jusqu'au magasin de stockage.

Par ailleurs, à la différence du pantographe 16 selon le premier mode de réalisation, et selon la variante dans laquelle le barillet 55 est équipé d'un moteur d'entraînement en rotation et dans laquelle le pantographe 52 comporte des moyens de commande de ce moteur, le pantographe 52 permet d'échanger les bandes de frottement 15A, 15B, 15C pendant que le véhicule est en mouvement.

Les autres avantages de ce deuxième mode de réalisation, concernant l'interopérabilité du système de captage de courant du véhicule ferroviaire 50, sont identiques à ceux du premier mode de réalisation, et ne sont donc pas décrits à nouveau.

Ce deuxième mode de réalisation constitue le mode de réalisation préférentiel de l'invention.

Sur la figure 4, l'archet 54 comporte en variante deux barillets 55 et deux supports 56. Chaque support 56 est porté à l'extrémité du bras supérieur 26, les deux supports 56 étant reliés entre eux à l'extrémité du bras supérieur 26 au moyen d'une liaison inamovible 61.

En variante, l'archet 54 comporte de la même façon un nombre P de barillets 55 et P supports 56, P étant un nombre entier supérieur ou égal à trois.

On notera qu'on pourrait envisager un pantographe comprenant des cornes 30 mobiles et des bandes de frottement fixes.

Ainsi, quel que soit le mode réalisation de l'invention, l'utilisation des moyens de commande 23 associés aux moyens d'actionnement 23A, 23B, 46 permettent une variation de la longueur de l'archet 22 ; 54 et/ou une substitution des bandes de frottement 15C de manière commandée, c'est-à-dire sans intervention humaine en toiture du véhicule 10.

## Revendications

1. Pantographe (16 ; 52) de véhicule ferroviaire (10 ; 50), du type comprenant :
- un bras articulé déployable (20) de support,
- un archet (22 ; 54) monté à l'extrémité du bras articulé (20), lequel archet comporte un support (28 ; 56) rigide porté à l'extrémité du bras (20), et au moins une bande de frottement (15A, 15B, 15C) portée par le support (28 ; 56),
**caractérisé en ce que** l'archet (22 ; 54) comporte :
- au moins une paire de cornes (30) isolantes prolongeant de part et d'autre chaque bande de frottement (15A, 15B, 15C), chaque corne (30) isolante étant mobile par rapport au support (28 ; 56) de l'archet (22 ; 54), et
- des moyens d'actionnement (46) de chaque corne (30) par rapport au support (28 ; 56).

2. Pantographe (16; 52) selon la revendication 1, dans lequel les moyens d'actionnement (46) sont propres à déplacer chaque corne (30) indépendamment de la position du pantographe.

3. Pantographe (16 ; 52) selon la revendication 2, dans lequel dans lequel les moyens d'actionnement (46) comprennent au moins une paire d'actionneurs commandables à distance, par exemple une paire de vérins pneumatiques.

4. Pantographe (16 ; 52) selon l'une quelconque des revendications 1 à 3 dans lequel le pantographe (16 ; 52) comporte :
- des premiers moyens d'actionnement (23A) du bras articulé (20),
- des seconds moyens d'actionnement (23B) des bandes de frottement, et
- des moyens de commande (23) des premiers et seconds moyens d'actionnement (23A, 23B), de manière à substituer sur l'archet (22 ; 54) au moins une premier bande de frottement (15A, 15B, 15C) par au moins une deuxième bande de frottement (15A, 15B, 15C) différente de la première bande.

5. Pantographe (16 ; 52) selon la revendication 4, dans lequel la substitution de chaque première bande (15A, 15B, 15C) par chaque deuxième bande (15A, 15B, 15C) est réalisée par déplacement de chaque première bande depuis une position active dans laquelle cette bande de frottement est destinée à frotter contre une caténaire (18) jusqu'au moins une position escamotée dans laquelle cette bande de frottement est à l'écart de la caténaire (18), et par déplacement de chaque deuxième bande depuis une position escamotée jusqu'à la position active.

6. Pantographe (16 ; 52) selon la revendication 5, dans lequel l'archet (22 ; 54) comprend deux premières bandes de frottement (15A, 15B, 15C) disposées simultanément dans la position active ou dans la position escamotée, et deux secondes bandes de frottement disposées simultanément dans la position escamotée ou dans la position active.

7. Pantographe (16) selon la revendication 5 ou 6, dans lequel chaque première bande de frottement (15A, 15B, 15C) présente deux extrémités (44), propre chacune à coopérer avec une patte (31) de support prévue sur le support (28), les moyens de substitution (23, 23A, 23B) étant propres à déplacer chaque première bande de frottement (15A, 15B, 15C) depuis sa position active supportée par la patte (31) jusqu'à sa position escamotée dans un magasin de stockage (12), lequel magasin comporte au moins la deuxième bande de frottement (15A, 15B, 15C), et à substituer sur les pattes (31) chaque première bande de frottement par chaque deuxième bande de frottement.

8. Pantographe (52) selon l'une quelconque des revendications 1 à 6, dans lequel l'archet (54) comporte au moins un barillet (55) rotatif par rapport au support (56), chaque barillet (55) rotatif portant au moins chacune des première et deuxième bandes de frottement et étant propre à décrire un mouvement de rotation par rapport au support (56), autour d'un axe longitudinal.

9. Pantographe (52) selon la revendication 8, dans lequel l'archet (54) comporte deux barillets (55) rotatifs portant chacun des première et deuxième bandes de frottement.

10. Pantographe (52) selon la revendication 8 ou 9, dans lequel chaque barillet (55) rotatif est cylindrique de forme polygonale présentant au moins deux faces (60A, 60B, 60C, 60D), chaque première bande de frottement étant agencée sur une première face du barillet (55), et chaque deuxième bande de frottement étant agencée sur une deuxième face du barillet (55) distincte de la première.

11. Véhicule ferroviaire (10 ; 50) **caractérisé en ce qu'**il comprend un pantographe (16 ; 52) selon l'une quelconque des revendications précédentes.

## Patentansprüche

1. Stromabnehmer (16; 52) für Schienenfahrzeuge (10; 50), umfassend:
- einen ausfahrbaren gelenkigen Trägerarm (20),
- einen Schleifarm (22; 54), der am Ende des gelenkigen Arms (20) montiert ist, wobei der Schleifarm einen starren Träger (28; 56), der am Ende des Arms (20) getragen wird, und mindestens eine von dem Träger (28; 56) getragene Schleifleiste (15A, 15B, 15C) aufweist,
**dadurch gekennzeichnet, dass** der Schleifarm (22; 54) umfasst:
- mindestens ein Paar von isolierenden Hörnern (30), die beidseitig jede Schleifleiste (15A, 15B, 15C) verlängern, wobei jedes Isolierhorn (30) in Bezug auf den Träger (28, 56) des Schleifarms (22; 54) beweglich ist, und
- Mittel (46) zum Betätigen jedes Horns (30) in Bezug auf den Träger (28; 56).

2. Stromabnehmer (16; 52) nach Anspruch 1, bei dem die Betätigungsmittel (46) geeignet sind, jedes Horn (30) unabhängig von der Stellung des Stromabnehmers zu verschieben.

3. Stromabnehmer (16; 52) nach Anspruch 2, bei dem die Betätigungsmittel (46) mindestens ein Paar von fernsteuerbaren Stellantrieben, zum Beispiel ein Paar von Pneumatikzylindern umfasst.

4. Stromabnehmer (16; 52) nach einem beliebigen der Ansprüche 1 bis 3, bei dem der Stromabnehmer (16; 52) umfasst:
- erste Mittel (23A) zum Betätigen des gelenkigen Arms (20),
- zweite Mittel (23B) zum Betätigen der Schleifleisten, und
- Mittel (23) zum Steuern der ersten und zweiten Betätigungsmittel (23A, 23B) derart, dass an dem Schleifarm (22; 54) mindestens eine erste Schleifleiste (15A, 15B, 15C) durch mindestens eine zweite Schleifleiste (15A, 15B, 15C) ersetzt wird, die unterschiedlich zu der ersten Leiste ist.

5. Stromabnehmer (16; 52) nach Anspruch 4, bei dem das Ersetzen jeder ersten Leiste (15A, 15B, 15C) durch jede zweite Leiste (15A, 15B, 15C) durch Verschiebung jeder ersten Leiste von einer aktiven Stellung, in der jede Schleifleiste vorgesehen ist, an der Fahrleitung (18) zu schleifen, bis zu einer eingefahrenen Stellung, bei der jede Schleifleistung zu der Fahrleitung (18) beabstandet ist, und durch Verschiebung jeder zweiten Leiste von der eingefahrenen Stellung in die aktive Stellung realisiert wird.

6. Stromabnehmer (16; 52) nach Anspruch 5, bei dem der Schleifarm (22; 54) zwei erste Schleifleisten (15Y, 15B, 15C), die gleichzeitig in der aktiven Stellung oder der eingefahrenen Stellung angeordnet sind, und zwei zweite Schleifleisten, die gleichzeitig in der eingefahrenen Stellung oder in der aktiven Stellung angeordnet sind, umfasst.

7. Stromabnehmer (16) nach Anspruch 5 oder 6, bei dem jede erste Schleifleiste (15A, 15B, 15C) zwei Enden (44) aufweist, die jeweils geeignet sind, mit einem an dem Träger (28) vorgesehenen Lagerbügel (31) zusammenzuarbeiten, wobei die Ersetzungsmittel (23, 23A, 23B) geeignet sind, jede erste Schleifleiste (15A, 15B, 15C) von ihrer aktiven, von dem Bügel (31) gelagerten Stellung in ihre in ein Lagermagazin (12) eingefahrene Stellung zu bewegen, wobei das Magazin mindestens die zweite Schleifleiste (15A, 15B, 15C) aufweist, und an den Bügeln (31) jede erste Schleifleiste durch jedes zweite Schleifleiste zu ersetzen.

8. Stromabnehmer (52) nach einem beliebigen der Ansprüche 1 bis 6, bei dem der Schleifarm (54) mindestens eine in Bezug auf den Träger (56) drehbare Trommel (55) aufweist, wobei jede drehbare Trommel (55) mindestens jede der ersten und zweiten Schleifleisten trägt und geeignet ist, eine Drehbewegung in Bezug auf den Träger (56) um eine Längsachse zu beschreiben.

9. Stromabnehmer (52) nach Anspruch 8, bei dem der Schleifarm (54) zwei drehbare Trommeln (55) aufweist, die jeweils erste und zweite Schleifleisten tragen.

10. Stromabnehmer (52) nach Anspruch 8 oder 9, bei dem jede drehbare Trommel (55) zylindrisch in polygonaler Form ausgebildet ist, die mindestens zwei Flächen (60A, 60B, 60C, 60D) aufweist, wobei jede erste Schleifleiste an einer ersten Fläche derTrommel (55) angeordnet ist, und jede zweite Schleifleiste an einer zweiten Fläche der Trommel (55), die unterschiedlich zu der ersten ist, angeordnet ist.

11. Schienenfahrzeug (10; 50), **dadurch gekennzeichnet, dass** es einen Stromabnehmer (16; 52) nach einem beliebigen der vorhergehenden Ansprüche aufweist.

## Claims

1. A railway vehicle (10; 50) pantograph (16; 52) of the type comprising:
- an articulated, extended support arm (20),
- a bow (22; 54) mounted at the end of the articulated arm (20) ; the bow comprises a rigid support (28; 56) carried at the end of the arm (20) and at least one friction band (15A, 15B, 15C) carried by the support (28 ; 56),
**characterized in that** the bow (22; 54) comprises:
- at least a pair of insulating horns (30) extending each friction band (15A, 15B, 15C) on either side, each insulating horn (30) being movable in relation to the support (28; 56) the bow (22; 54), and
- actuating means (46) of each horn (30) in relation to the support (28; 56).

2. Pantograph (16; 52) according to claim 1, in which the actuating means (46) are adapted to move each horn (30) independently of the pantograph's position.

3. Pantograph (16; 52) according to claim 2, in which the actuating means (46) comprise at least a pair of remotely controllable actuators, for example a pair of pneumatic cylinders.

4. Pantograph (16; 52) according to any one of the claims 1 to 3 in which the pantograph (16; 52) comprises:
- the first actuating means (23A) of the articulated arm (20),
- the second actuating means (23B) of the friction band, and
- the control means (23) of the first and second actuating means (23A, 23B), such as to replace on the bow (22; 54) at least a first friction band (15A, 15B, 15C) with at least a second friction band (15A, 15B, 15C) different from the first band.

5. Pantograph (16; 52) according to claim 4, in which the substitution of each first band (15A, 15B, 15C) with each second band (15A, 15B, 15C) is carried out by moving each first band from an active position in which this friction band is intended to rub against a catenary (18) to at least a retracted position in which this friction band is away from the catenary (18), and by moving each second band from a retracted position to the active position.

6. Pantograph (16; 52) according to claim 5, in which the bow (22; 54) comprises first two friction bands (15A, 15B, 15C) placed simultaneously in the active position or the retracted position, and two second friction bands placed simultaneously in the retracted position or the active position.

7. Pantograph (16) according to claim 5 or 6, in which each first friction band (15A, 15B, 15C) has two ends (44), each adapted to co-operate with a support bracket (31) provided on the support (28), the means of substitution (23, 23A, 23B) being adapted to move each first friction band (15A, 15B, 15C) from its active position supported by the bracket (31) to its retracted position in a storage magazine (12); which storage magazine includes at least the second friction band (15A, 15B, 15C), and each first friction band to be replaced with each second friction band on the brackets (31).

8. Pantograph (52) according to any one of the claims 1 to 6, in which the bow (54) comprises at least one rotating cylinder (55) in relation to the support (56), each rotating cylinder (55) carrying at least each of the first and second friction bands and being adapted to describe a rotating movement in relation to the support (56), around a longitudinal axis.

9. Pantograph (52) according to claim 8, in which the bow (54) comprises two rotating cylinders (55) carrying each of the first and second friction bands.

10. Pantograph (52) according to claim 8 or 9, in which each rotating cylinder (55) is in the shape of a polygonal cylinder having at least two sides (60A, 60B, 60C, 60D), each first friction band being positioned on a first side of the cylinder (55), and each second friction band being positioned on a second side of the cylinder (55) separate from the first.

11. Railway vehicle (10; 50) **characterized in that** it comprises a pantograph (16; 52) according to any one of the above claims.
